# EUROPEAN PATENT APPLICATION

(11) **EP 4 559 988 A1**
(43) Date of publication of application: **28.05.2025**
(21) Application number: 23869584.5
(22) Date of filing: 26.04.2023
(51) Int. Cl.: C09J 7/00, C09J 7/40

(54) **BACK ADHESIVE STRUCTURE AND TERMINAL DEVICE**

(30) Priority: 28.09.2022 CN 202222580893 U
(71) Applicant: Honor Device Co., Ltd., Shenzhen, Guangdong 518040 (CN)
(72) Inventor: ZHANG, Yihe, Shenzhen, Guangdong 518040 (CN); HUO, Wenlong, Shenzhen, Guangdong 518040 (CN); ZHAO, Huicong, Shenzhen, Guangdong 518040 (CN); XIE, Weiwei, Shenzhen, Guangdong 518040 (CN)
(74) Representative: Goddar, Heinz J.
(86) International application number: PCT/CN2023/090792
(87) International publication number: WO 2024/066329

(57) **Abstract**

This application discloses a back adhesive structure, and a terminal device, belonging to the technical field of back adhesive. The back adhesive structure includes: a release film and a back adhesive layer. The release film is provided with a first side and a second side opposite to each other. The first side is connected to a tearing part. The back adhesive layer and the release film are stacked. The back adhesive layer includes at least one partition block. The partition block is provided with at least one first flow channel. A length of the first flow channel extends along a length extension direction of the first side of the release film. The first flow channel is provided with a first flow channel wall and a second flow channel wall that extend along a length direction of the first flow channel and are opposite to each other. The first flow channel wall faces to an initial tearing direction of the tearing part. The second flow channel wall faces away from the initial tearing direction of the tearing part. A length of the first flow channel wall is not less than a first set value. The terminal device includes the back adhesive layer of the back adhesive structure. When the release film protecting the back adhesive is torn off, this application can reduce the possibility that the back adhesive is wrinkled since the back adhesive is lifted up.

## Description

### BACK ADHESIVE STRUCTURE, AND TERMINAL DEVICE

This application claims priority to Chinese Patent Application No. 202222580893.4, filed in China on September 28, 2022, and entitled "BACK ADHESIVE STRUCTURE, AND TERMINAL DEVICE", which is incorporated herein by reference in its entirety.

### TECHNICAL FIELD

This application relates to the technical field of back adhesive, and in particular, to a back adhesive structure, and a terminal device.

### BACKGROUND

Back adhesive is a commonly used material in electronic devices, and is used for bonding different components together and playing a role in fixing or assisting in fixing. Taking battery back adhesive as an example, a battery and a structural member of a mobile phone (usually a middle frame) are bonded together on a large surface by using the battery back adhesive.

There is a type of adhesive known as adhesive with adhesiveness reducible by alcohol, which has strong bonding force. However, after being wetted in some liquids such as alcohol, its adhesiveness will significantly decrease, thereby facilitating the removal. This type of back adhesive is widely applied in electronic terminal products (especially battery back adhesive). However, due to the limited diffusion ability of liquids such as alcohol, if the back adhesive is of a regular whole-piece shape or has a large width, it will cause an internal non-wetting problem. The non-wetted part has strong bonding force, consequently making it difficult to remove. Therefore, special flow channels are usually designed for adhesives with adhesiveness reducible by alcohol, so to allow alcohol to enter the inside.

However, the adhesive with adhesiveness reducible by alcohol may pose a problem. Given that its adhesiveness is weak before being activated with a pressure, when a release film protecting the back adhesive is torn off, the back adhesive may be lifted up (commonly referred to as reverse release). As a result, the back adhesive is wrinkled, leading to a series of production problems or reliability risks. Generally, the release film has a fixed tearing position, so a direction in which the release film is torn off is generally fixed.

### SUMMARY

This application provides a back adhesive structure, and a terminal device, aiming at solving the problem that since the adhesiveness of an adhesive with adhesiveness reducible by alcohol is weak before being activated with a pressure, when a release film protecting the back adhesive is torn off, the back adhesive may be lifted up, causing the back adhesive to be wrinkled.

The technical solutions are as follows:
According to a first aspect, this application provides a back adhesive structure, including:
a release film, where the release film is provided with a first side and a second side opposite to each other, and the first side is connected to a tearing part; and a back adhesive layer, where the back adhesive layer and the release film are stacked, the back adhesive layer includes at least one partition block, the partition block is provided with at least one first flow channel, a length of the first flow channel extends along a length extension direction of the first side of the release film, the first flow channel is provided with a first flow channel wall and a second flow channel wall that extend along a length direction of the first flow channel and are opposite to each other, the first flow channel wall faces to an initial tearing direction of the tearing part, the second flow channel wall faces away from the initial tearing direction of the tearing part, and a length of the first flow channel wall is not less than a first set value.

By adopting the above solution, the back adhesive layer can be protected through the release film, and the back adhesive layer can be conveniently bonded to a desired position. By providing the tearing part on the first side of the release film, the release film can be separated from the back adhesive layer by clamping the tearing part after the back adhesive layer is bonded. Since the length of the first flow channel wall is not less than the first set value, the length of the first flow channel wall is long, so that the bonding force between a solid part of the partition block at the first flow channel wall and a bonding position is large, and the back adhesive layer at the first flow channel wall is not easily lifted up at an early stage of tearing off the tearing part, thereby reducing the possibility that the back adhesive is wrinkled.

In some implementations, a plurality of first flow channels are provided in the partition block, and the plurality of first flow channels are provided side by side; and the first set value is not less than half a width of the partition block.

By adopting the above solution, when alcohol is used for reducing the adhesiveness of the back adhesive layer, the back adhesive layer can be favorably wetted, thereby facilitating the removal. Moreover, the first set value is not less than half of the width of the partition block, thereby ensuring that the bonding force between the back adhesive layer at the flow channel wall and the bonding position is large.

In some implementations, a length direction of the first side is parallel to a width direction of the partition block.

By adopting the above solution, manufacturing of the release film and the back adhesive layer is facilitated, so that when the back adhesive structure is used, the first flow channel is equivalently in a horizontal design.

In some implementations, the first flow channel is provided with an inlet end and a blind end opposite to each other, the blind end of the first flow channel is close to the tearing part, and the inlet end of the first flow channel is away from the tearing part.

By adopting the above solution, the inlet end of the first flow channel is further away from the tearing part, and the first flow channel wall at the blind end is connected to the solid part of the partition block, so that when the tearing part is torn off, the possibility of lifting up the solid part of the partition block at the first flow channel wall can be further reduced.

In some implementations, the first flow channel wall is away from the first side of the release film and close to the second side of the release film.

By adopting the above solution, the position of the first flow channel wall on the partition block can be further limited.

In some implementations, the partition block further includes at least one second flow channel, and an angle is formed between a length extension direction of the second flow channel and a length extension direction of the first flow channel.

By adopting the above solution, since the first flow channel and the second flow channel are provided cooperatively, the back adhesive layer can be more favorably wetted, thereby facilitating the removal.

In some implementations, a plurality of second flow channels are provided, the plurality of second flow channels are provided side by side, and the angle formed between the length extension direction of the second flow channel and the length extension direction of the first flow channel is a right angle.

By adopting the above solution, on the one hand, the back adhesive layer can be favorably wetted, thereby facilitating the removal. On the other hand, in the process of tearing off the release film, the tearing direction changes, that is, it is substantially perpendicular to the length direction of the second flow channel, thereby reducing the possibility of lifting up the solid part of the partition block at the flow channel wall of the second flow channel.

In some implementations, the second flow channel is provided with an inlet end and a blind end opposite to each other, the blind end of the second flow channel is close to the tearing part, and the inlet end of the second flow channel is away from the tearing part.

By adopting the above solution, the possibility of lifting up the solid part of the partition block at the flow channel wall of the second flow channel is reduced.

In some implementations, a plurality of partition blocks are provided, the plurality of partition blocks are arranged in rows and columns, and every two adjacent partition blocks are spaced apart.

By adopting the above solution, the back adhesive layer can be favorably wetted, thereby facilitating the removal. In addition, back adhesive layers with different sizes may be formed according to the needs.

In some implementations, a trunk flow channel is formed between every two adjacent partition blocks; and the first flow channel of at least one partition block is communicated with the trunk flow channel, and the second flow channel of at least one partition block is communicated with the trunk flow channel.

By adopting the above solution, the alcohol can easily flow into the first flow channel and the second flow channel in the partition block through the trunk flow channel, thereby wetting the back adhesive layer as much as possible.

In some implementations, a width of the first flow channel is equal to a width of the second flow channel, the width of the first flow channel is less than a width of the trunk flow channel, and the width of the second flow channel is less than the width of the trunk flow channel.

By adopting the above solution, the alcohol can easily flow into different first flow channel and second flow channel through the trunk flow channel. In addition, the width of the first flow channel and the width of the second flow channel are less than the width of the trunk flow channel, thereby reducing the possibility of lifting up the solid part of the partition block.

In some implementations, the tearing part is close to a first corner formed at an intersection between two adjacent sides of the release film.

By adopting the above solution, the tearing part is provided at the corner, thereby reducing the possibility of lifting up the back adhesive layer.

In some implementations, the back adhesive structure further includes a base film, and the back adhesive layer is sandwiched between the release film and the base film.

By adopting the above solution, the base film can protect the back adhesive layer.

According to a second aspect, this application provides a terminal device including the back adhesive layer of any of the back adhesive structures.

By adopting the above solution, when the terminal device is assembled, the possibility of lifting up the back adhesive layer is reduced, thereby reducing the situation that the back adhesive is wrinkled.

In some implementations, the terminal device includes a battery and a middle frame, and the battery and the middle frame are connected through the back adhesive layer.

By adopting the above solution, when the terminal device is assembled, the possibility of lifting up the back adhesive layer at the battery and the middle frame is reduced, thereby reducing the situation that the back adhesive is wrinkled.

### BRIEF DESCRIPTION OF DRAWINGS

FIG. 1 is a schematic structural diagram of a release film when fitted with a back adhesive layer according to an embodiment of this application;
FIG. 2 is a schematic structural diagram of a partition block according to an embodiment of this application;
FIG. 3 is another schematic structural diagram of a partition block according to an embodiment of this application;
FIG. 4 is a schematic structural diagram of a back adhesive layer according to an embodiment of this application;
FIG. 5 is a schematic diagram of a back adhesive structure according to an embodiment of this application;
FIG. 6 is a schematic cross-sectional structural diagram of a back adhesive structure according to an embodiment of this application;
FIG. 7 is another schematic structural diagram of a back adhesive structure according to an embodiment of this application;
FIG. 8 is a schematic structural diagram of a terminal device according to an embodiment of this application;
FIG. 9 is a state diagram of a solid part of a back adhesive layer not wetted by alcohol according to an embodiment of this application; and
FIG. 10 is a state diagram of a solid part of a back adhesive layer fully wetted by alcohol according to an embodiment of this application.

### Description of reference numerals:

100-release film; 101-back adhesive layer; 102-first side; 103-second side; 104-partition block; 105-first flow channel; 106-first flow channel wall; 107-second flow channel wall; 108-blind end; 109-inlet end; 110-second flow channel; 111-upper width side; 112-lower width side; 113-left length side; 114-right length side; 115-third flow channel wall; 116-fourth flow channel wall; 117-trunk flow channel; 118-first corner; 119-base film; 120-first positioning through hole; 121-second positioning through hole; 123-tearing through hole; 124-tearing direction marking line; 125-Initial tearing direction; 126-tearing part; 201-battery; and 202-middle frame.

### DESCRIPTION OF EMBODIMENTS

To make the objectives, technical solutions, and advantages of this application clearer, the following further describes implementations of this application in detail with reference to the drawings.

It should be understood that "multiple" mentioned in this application means two or more. In the descriptions of this application, unless otherwise specified, "/" means "or". For example, A/B may mean A or B. "And/or" used herein describes only an association relationship between associated objects and represents that three relationships may exist. For example, A and/or B may represent the following three cases: only A exists, both A and B exist, and only B exists. In addition, to clearly describe the technical solutions of this application, words such as "first" and "second" are used to distinguish the same items or similar items with substantially the same functions and effects. Those skilled in the art may understand that the words such as "first" and "second" do not limit the quantity or execution sequence, and the words such as "first" and "second" do not define a definite difference.

A back adhesive structure, and a terminal device provided in embodiments of this application will be described below in detail.

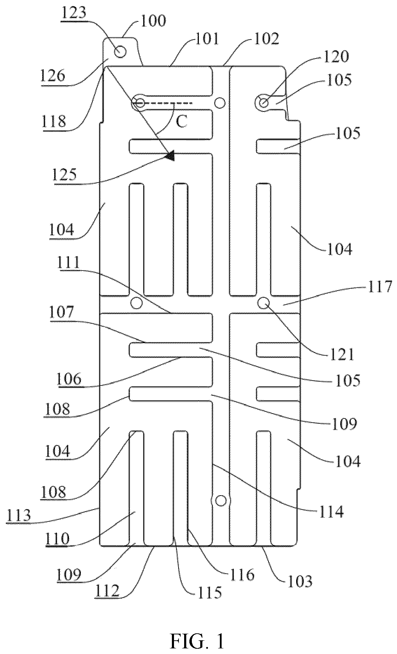

Referring to FIG. 1, in one or more embodiments, this application provides a back adhesive structure, including: a release film 100 and a back adhesive layer 101. The release film 100 is provided with a first side 102 and a second side 103 opposite to each other, and the first side 102 is connected to a tearing part 126. The back adhesive layer 101 and the release film 100 are stacked, the back adhesive layer 101 includes at least one partition block 104, the partition block 104 is provided with at least one first flow channel 105, a length of the first flow channel 105 extends along a length extension direction of the first side 102 of the release film 100, the first flow channel 105 is provided with a first flow channel wall 106 and a second flow channel wall 107 that extend along a length direction of the first flow channel 105 and are opposite to each other, the first flow channel wall 106 faces to an initial tearing direction 125 of the tearing part 126, the second flow channel wall 107 faces away from the initial tearing direction 125 of the tearing part 126, and a length of the first flow channel wall 106 is not less than a first set value.

In the back adhesive structure in at least one embodiment of this application, the back adhesive layer 101 can be protected through the release film 100, and the back adhesive layer 101 can be conveniently bonded to a desired position. By providing the tearing part 126 on the first side 102 of the release film 100, the release film 100 can be separated from the back adhesive layer 101 by clamping the tearing part 126 after the back adhesive layer 101 is bonded. Since the length of the first flow channel wall 106 is not less than the first set value, the length of the first flow channel wall 106 is long, so that the bonding force between the solid part of the partition block 104 at the first flow channel wall 106 and a bonding position is large, and the back adhesive layer 101 at the first flow channel wall 106 is not easily lifted up at an early stage of tearing off the tearing part 126, thereby reducing the possibility that the back adhesive is wrinkled.

Referring to FIG. 1, in some embodiments, the length direction of the first flow channel 105 is parallel to the length direction of the first side 102 of the release film 100. The release film 100 is used for protecting the back adhesive layer 101. After the back adhesive layer 101 is bonded to the bonding position, the bonding position is a set position for a component that needs to be bonded, so that other components can be conveniently bonded to the component with the back adhesive layer 101. Due to the adhesive structure of the back adhesive layer 101, the bonding between the back adhesive layer 101 and the component can be achieved. The edge contour of the release film 100 is polygonal, thereby facilitating manufacturing of the release film 100. The first side 102 and the second side 103 of the release film 100 are the edges of the release film 100. The first side 102 and the second side 103 are provided parallel to each other. The tearing part 126 is flake-like. The edge contour of the tearing part 126 may be rectangular. Through the tearing part 126, the tearing part 126 can be conveniently clamped with a hand or an instrument, so as to drive the movement of the entire release film 100 through the tearing part 126 and separate the release film 100 from the back adhesive layer 101. In an embodiment, the edge contour of the release film 100 is generally rectangular, and the first side 102 and the second side are sides in the width direction of the release film 100. The release film 100 and the back adhesive layer 101 are attached together. The surface of the release film 100 in contact with the back adhesive layer 101 is generally configured as a smooth surface to facilitate the separation of the release film 100 from the back adhesive layer 101. The back adhesive layer 101 is provided with the partition block 104 to facilitate the partition of the back adhesive layer 101, thereby helping the alcohol to fully wet the back adhesive layer 101 as much as possible. The first flow channel 105 is strip-shaped. The width direction of the first flow channel 105 is the distance between the first flow channel wall 106 and the second flow channel wall 107. An included angle is formed between the initial tearing direction 125 of the tearing part 126 and the length direction of the first flow channel 105, thereby facilitating the operation of tearing off the release film 100.

Referring to FIG. 1, in some embodiments, the angle C formed between the initial tearing direction of the tearing part 126 and the length direction of the first flow channel 105 is an acute angle. Such configuration can reduce the component force of the peeling force in the direction perpendicular to the length direction of the first flow channel 105 at the early stage of tearing off the release film 100, thereby reducing the possibility of lifting up the solid part of the partition block 104. The peeling force refers to the pulling force required to separate the release film 100 from the back adhesive layer 101 at a certain peeling angle and peeling speed under specific conditions. In an embodiment, the angle formed between the initial tearing direction of the tearing part 126 and the length direction of the first flow channel 105 is not more than 70°. Optionally, for example, it may be 65°, 60°, 45°, 40°, or 30°. In this way, at the early stage of tearing off the release film 100, the component force of the peeling force in the length direction of the first flow channel 105 is large, while the component force in the direction perpendicular to the length direction of the first flow channel 105 is small, thereby further reducing the possibility of lifting up the solid part of the partition block 104.

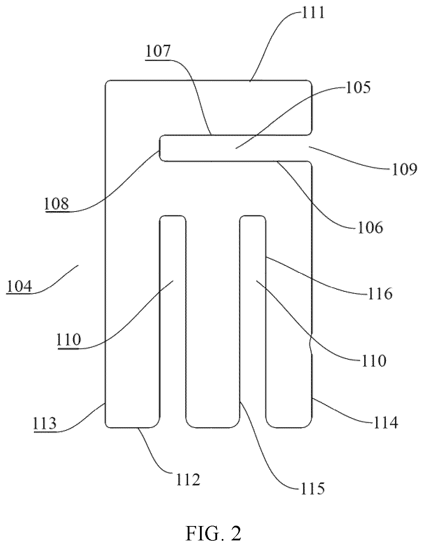

Referring to FIG. 2, in some embodiments, the number of the first flow channel 105 in the partition block 104 is one. One first flow channel 105 is generally suitable for the situation where the area of the partition block 104 is small.

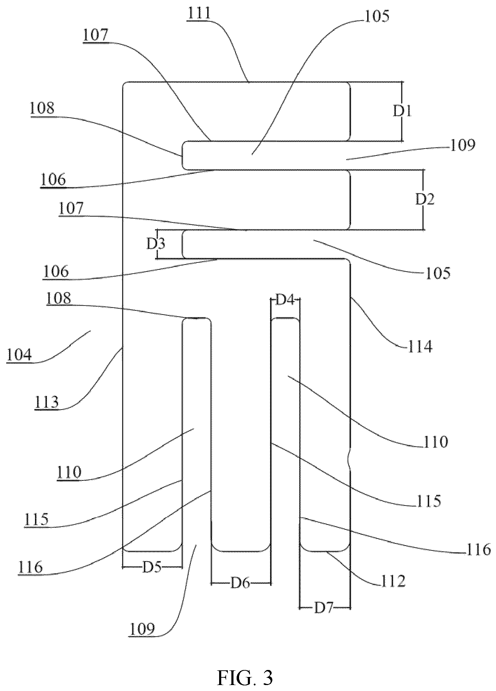

Referring to FIG. 3, in some other embodiments, a plurality of the first flow channels 105 in the partition block 104 are provided, the plurality of first flow channels 105 are provided side by side, and the length directions of the plurality of first flow channels 105 are parallel to each other. The plurality of first flow channels 105 are provided in parallel along a direction from the first side 102 to the second side 103 of the release film 100. The length direction of each first flow channel 105 is perpendicular to the direction from the first side 102 to the second side 103 of the release film 100. In this way, after the plurality of first flow channels 105 are provided in parallel, when alcohol is used for reducing the adhesiveness of the back adhesive layer 101, the back adhesive layer 101 can be favorably wetted, thereby facilitating the removal. The number of the first flow channel 105 in the partition block 104 is two or more. In one embodiment, the number of the first flow channels 105 in the partition block 104 is two. It is to be understood that the number of the first flow channels 105 in the partition block 104 may also be three or four, and may be specifically determined according to the area of the back adhesive layer 101.

Referring to FIG. 1, FIG. 2, and FIG. 3, in some embodiments, the first set value is not less than half a width of the partition block 104. Reverse release generally occurs at the flow channel wall that faces to the tearing direction of the release film 100 and has a smaller length. In this embodiment of this application, the length of the first flow channel wall 106 facing to the initial tearing direction 125 of the tearing part 126 is extended, for example, not less than half a width of the partition block 104. Since most reverse release problems occur on the side of the back adhesive layer 101 that faces to the tearing direction of the release film 100 and the length of the side is small, such arrangement is conducive to ensuring that the bonding force between the back adhesive layer 101 at the flow channel wall and the bonding position is large, thereby reducing the possibility of lifting up the solid part of the back adhesive layer 101 when tearing off the release film 100.

It is to be understood that the lengths of the plurality of first flow channels 105 may be set equal, or the plurality of first flow channels 105 with unequal lengths may be provided according to the needs.

Referring to FIG. 1, in some implementations, the length direction of the first side 102 is parallel to the width direction of the partition block 104. In an embodiment, the partition block 104 is polygonal. For example, the partition block 104 is substantially rectangular or square. In this way, manufacturing of the release film 100 and the back adhesive layer 101 is facilitated, so that when the back adhesive structure is used, the first flow channel 105 is equivalently in a horizontal design.

Referring to FIG. 1, in some implementations, the first flow channel 105 is provided with an inlet end 109 and a blind end 108 opposite to each other, the blind end 108 of the first flow channel 105 is close to the tearing part 126, and the inlet end 109 of the first flow channel 105 is away from the tearing part 126. The inlet end 109 of the first flow channel 105 is kept away from the tearing part 126, so that the inlet end 109 is opposite to the initial tearing direction 125, thereby reducing the possibility of lifting up the solid part of the back adhesive at the inlet end 109. In addition, since the inlet end 109 of the first flow channel 105 is further away from the tearing part 126 and the first flow channel wall 106 at the blind end 108 is connected to the solid part of the partition block 104, when the tearing part 126 is torn off, the possibility of lifting up the solid part of the partition block 104 at the first flow channel wall 106 can be reduced.

Referring to FIG. 1, in some implementations, the first flow channel wall 106 is away from the first side 102 of the release film 100 and close to the second side 103 of the release film 100. In this way, the position of the first flow channel wall 106 on the partition block 104 can be further limited.

Referring to FIG. 1, in some implementations, the partition block 104 further includes at least one second flow channel 110, and an angle is formed between a length extension direction of the second flow channel 110 and a length extension direction of the first flow channel 105. By providing the second flow channel 110 and forming an angle with respect to the first flow channel 105, after the first flow channel 105 and the second flow channel 110 are designed cooperatively, the length of the second flow channel 110 can be reduced, thereby reducing the situation of insufficient liquid filling at the end of the second flow channel 110, lowering the risk of insufficient wetting, and facilitating the wetting of the back adhesive layer 101 and facilitating the removal.

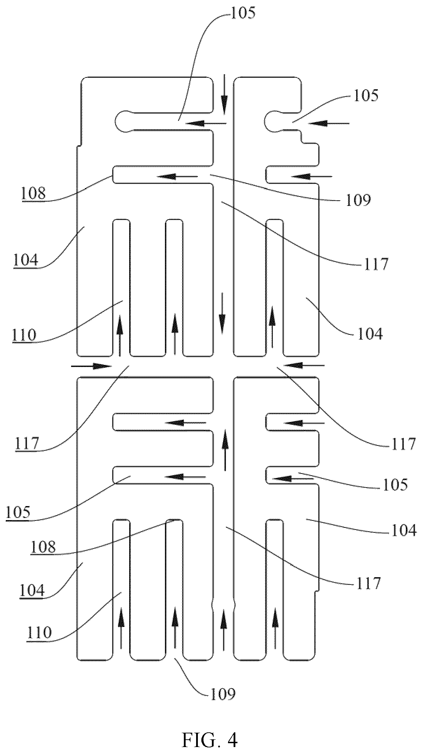

Referring to FIG. 1 and FIG. 4, in some implementations, a plurality of the second flow channels 110 are provided, the plurality of second flow channels 110 are provided side by side, the angle formed between the length extension direction of the second flow channel 110 and the length extension direction of the first flow channel 105 is a right angle, and the length direction of the second flow channel 110 is parallel to a direction from the first side 102 to the second side 103 of the release film 100. By providing the plurality of side-by-side second flow channels 110, on the one hand, the partition block 104 of the back adhesive layer 101 can be favorably wetted, thereby facilitating the removal. On the other hand, in the process of tearing off the release film 100, the tearing direction changes, that is, it is substantially perpendicular to the length direction of the second flow channel 110, thereby reducing the possibility of lifting up the solid part of the partition block 104 at the flow channel wall of the second flow channel 110. In an embodiment, the spacing between every two adjacent second flow channels 110 is equal, so that the plurality of second flow channels 110 can be evenly distributed on the partition block 104 and the solid part of the partition block 104 can be uniformly wetted, thereby further facilitating the removal of the back adhesive layer 101. The lengths of the plurality of second flow channels 110 in each partition block 104 are equal. It is to be understood that the area of each partition block 104 may be determined according to the actual needs, that is, the length and width of each partition block 104 are determined according to the size of the bonding surface in the terminal device, and the number of the first flow channels 105 and the number of the second flow channels 110 in each partition block 104 are determined according to the size of the partition block 104. In addition, the lengths of the second flow channels 110 in each partition block 104 may also be set to be unequal according to the actual needs.

Referring to FIG. 1, in some implementations, the second flow channel 110 is provided with an inlet end 109 and a blind end 108 opposite to each other, the blind end 108 of the second flow channel 110 is close to the tearing part 126, and the inlet end 109 of the second flow channel 110 is away from the tearing part 126. In this way, on one hand, the possibility of lifting up the solid part of the partition block 104 at the flow channel wall of the second flow channel 110 is reduced. On the other hand, since the second flow channel 110 is provided with the blind end 108, after the first flow channel 105 and the second flow channel 110 are provided on the partition block 104, the solid part of the partition block 104 is still a whole, and there will be no individual independent solid part due to the arrangement of the first flow channel 105 and the second flow channel 110, thereby further reducing the possibility of lifting up the back adhesive layer 101 on the premise of wetting the back adhesive layer 101. In an embodiment, in each partition block, the blind end 108 of the second flow channel 110 does not exceed the first flow channel wall 106 of the first flow channel 105 closest to the second side 103 of the release film 100. In other words, the blind end 108 of the second flow channel 110 is close to the second side 103 of the release film 100, and the first flow channel wall 106 of the first flow channel 105 closest to the second side 103 of the release film 100 is away from the second side 103 of the release film 100. The distribution of the second flow channel 110 and the first flow channel 105 on the partition block 104 is designed in such a way that an angle can be formed between the first flow channel 105 and the second flow channel 110, thereby reducing the length of the second flow channel 110, reducing the situation of insufficient liquid filling at the end of the second flow channel 110, and reducing the risk of insufficient wetting.

Referring to FIG. 1, in some embodiments, the length direction of the partition block 104 is parallel to the length direction of the release film 100, the width direction of the partition block 104 is parallel to the width direction of the release film 100, and the direction from the first side 102 of the release film 100 to its own second side 103 is parallel to the length direction of the release film 100. The length of the release film 100 is the distance between the first side 102 and the second side 103. The ratio of the sum of the widths of the plurality of second flow channels 110 in the partition block 104 to the width of the partition block 104 ranges from 0.2 to 0.3. For example, the ratio is 0.22 or 0.25. In this way, on the premise of ensuring sufficient wetting of the back adhesive layer 101, the possibility of lifting up the solid part of the partition block 104 is further reduced. In an embodiment, a width of the solid part of the partition block 104 between every two adjacent second flow channels 110 is equal to a width of the solid part of every two adjacent first flow channels 105, thereby reducing the possibility of lifting up the back adhesive layer 101. The second flow channel 110 is provided with a third flow channel wall 115 and a fourth flow channel wall 116 opposite to each other. The opposite sides of the solid part of the partition block 104 between every two adjacent second flow channels 110 are respectively the third flow channel wall 115 of one second flow channel 110 and the fourth flow channel wall 116 of the other second flow channel 110. The width D6 of the solid part of the partition block 104 between every two adjacent second flow channels 110 is the width between the third flow channel wall 115 of one second flow channels 110 and the fourth flow channel wall 116 of the other second flow channel 110, as shown in FIG. 3. The opposite sides of the solid part between every two adjacent first flow channels 105 are respectively the first flow channel wall 106 of one first flow channel 105 and the second flow channel wall 107 of the other first flow channel 105. The width D2 of the solid part of the partition block 104 between every two adjacent first flow channels 105 is the width between the first flow channel wall 106 of one first flow channel 105 and the second flow channel wall 107 of the other first flow channel 105, as shown in FIG. 3. In an embodiment, the width D3 of the first flow channel 105 is less than 3 mm, the width D4 of the second flow channel 110 is less than 3 mm, a width of the first flow channel 105 is the distance between the first flow channel wall 106 and the second flow channel wall 107 in the first flow channel 105, a width of the second flow channel 110 is the distance between the third flow channel wall 115 and the fourth flow channel wall 116 in the second flow channel 110, and the width of the first flow channel 105 is equal to the width of the second flow channel110. For example, the width of the first flow channel 105 is 2.5 mm, and the width of the second flow channel110 is 2.5 mm. In this way, liquid flow is facilitated on the premise of reducing the risk of reverse release. The width of the solid part of the partition block 104 between every two adjacent second flow channels 110 is more than the width of the second flow channel 110, and the width of the solid part of the partition block 104 between every two adjacent first flow channels 105 is more than the width of the first flow channel 105. It is to be understood that in some other implementations, the width of the first flow channel 105 is not more than half of the solid part of the partition block 104 between every two adjacent first flow channels 105, and the width of the second flow channel 110 is not more than half of the solid part of the partition block 104 between every two adjacent second flow channels 110, thereby reducing the risk of reverse release.

Referring to FIG. 1, in some embodiments, the length of the release film 100 is substantially equal to the length of the back adhesive layer 101, and a width of the release film 100 is substantially equal to a width of the back adhesive layer 101. Referring to FIG. 3, the partition block 104 is provided with an upper width side 111 and a lower width side112 opposite to each other, and a left length side 113 and a right length side 114 opposite to each other. The upper width side 111 of the partition block 104 is close to the first side 102 of the release film 100 and away from the second side 103 of the release film 100. In an embodiment, the first flow channel 105 in the partition block 104 is close to the upper width side 111, and the second flow channel 110 is close to the lower width side 112. The width D1 between the second flow channel wall 107 of the first flow channel 105 closest to the upper width side of the partition block 104 and the upper width side 111 of the partition block 104 is equal to the width D2 of the solid part of the partition block 104 between every two adjacent first flow channels 105, thereby reducing the risk of reverse release. The width D5 between the third flow channel wall 115 of the second flow channel 110 closest to the left length side 113 of the partition block 104 and the left width side of the partition block 104 is equal to the width D6 of the solid part of the partition block 104 between every two adjacent second flow channels 110, thereby reducing the risk of reverse release. Alternatively, the ratio of the width D7 between the fourth flow channel wall 116 of the second flow channel 110 closest to the right length side 114 of the partition block 104 and the right width side of the partition block 104 to the width D6 of the solid part of the partition block 104 between every two adjacent second flow channels 110 ranges from 0.8 to 1.0, thereby reducing the risk of reverse release. It is to be understood that in some other embodiments, the width D7 between the fourth flow channel wall 116 of the second flow channel 110 closest to the right length side 114 of the partition block 104 and the right width side of the partition block 104 is equal to the width D6 of the solid part of the partition block 104 between every two adjacent second flow channels 110, thereby facilitating the overall proper design of the back adhesive layer. The width D2 of the solid part of the partition block 104 between every two adjacent first flow channels 105 is equal to the width D6 of the solid part of the partition block 104 between every two adjacent second flow channels 110, thereby ensuring that the liquid can fully wet the solid part on the premise of reducing the risk of reverse release. The ratio of the length of the second flow channel 110 to the length of the partition block 104 ranges from 0.5 to 0.6, for example, it may be 0.5, 0.51, 0.55, or 0.60, and it may also be specifically determined according to the actual situation. The ratio of the length of the first flow channel 105 to the width of the partition block 104 ranges from 0.5 to 0.75, for example, it may be 0.5, 0.55, 0.6, 0.62, 0.65, 0.7, or 0.75, and it may also be specifically determined according to the actual situation. The length of the upper width side 111 and the left length side 113 of the partition block facing to the initial tearing direction may be such determined according to the need that the risk of reverse release can be reduced as much as possible.

Referring to FIG. 4, in some implementations, a plurality of the partition blocks 104 are provided, the plurality of partition blocks 104 are arranged in rows and columns, and every two adjacent partition blocks 104 are spaced apart. By adopting the arrangement in rows and columns, manufacturing can be facilitated and the entire back adhesive layer 101 can be favorably wetted, thereby facilitating the removal. In addition, back adhesive layers 101 with different sizes may be formed according to the needs. In an embodiment, the partition blocks 104 are distributed in two rows and two columns, the number of the first flow channels 105 and the number of the second flow channels 110 in the two partition blocks 104 in the first column are equal, and for example, each partition block 104 is provided with two first flow channels 105 and two second flow channels 110. The number of the first flow channels 105 and the number of the second flow channels 110 in the two partition blocks 104 in the second column are equal, and for example, each partition block 104 is provided with two first flow channels 105 and one second flow channel 110. In this way, by designing according to the size of the actual bonding surface of the terminal device on the premise of ensuring that the widths of the second flow channels 110 are equal, the risk of reverse release can be reduced.

Referring to FIG. 1 and FIG. 4, in some implementations, a trunk flow channel 117 is formed between every two adjacent partition blocks 104. The first flow channel 105 of at least one partition block 104 is communicated with the trunk flow channel 117, and the second flow channel 110 of at least one partition block 104 is communicated with the trunk flow channel 117, so that alcohol can enter the first flow channel 105 and the second flow channel 110 in the partition block 104 through the trunk flow channel 117, that is, enter the first flow channel 105 through the inlet end 109 of the first flow channel 105 and enter the second flow channel 110 through the inlet end 109 of the second flow channel 110, thereby wetting the entire back adhesive layer 101 as much as possible. In an embodiment, the inlet end 109 is located in the first flow channel 105 at the edge of the back adhesive layer 101, the inlet end 109 is located in the second flow channel 110 at the edge of the back adhesive layer 101, the liquid can directly enter the first flow channel 105 and the second flow channel 110 without passing through the trunk flow channel 117, the inlet end 109 is located in the first flow channel 105 between every two adjacent partition blocks 104, the inlet end 109 is located in the second flow channel 110 between every two adjacent partition blocks 104, and the liquid flows inside through the trunk flow channel 117 and flows inside through the respective inlet ends 109 of the first flow channel 105 and the second flow channel 110. The arrow in FIG. 4 shows the possible flowing direction of the liquid.

It is to be understood that it may be determined according to the actual situation whether to provide a connecting belt between every two adjacent partition blocks 104 to connect every two adjacent partition blocks 104. Of course, the arrangement of the connecting belt needs to ensure that the back adhesive layer 101 can be fully wetted.

Referring to FIG. 1 and FIG. 4, in some implementations, the width of the first flow channel 105 is less than a width of the trunk flow channel 117, and the width of the second flow channel 110 is less than the width of the trunk flow channel 117. The width of the trunk flow channel 117 is more than the width of the first flow channel 105 and the width of the second flow channel 110, so that more liquid can flow inside along the trunk flow channel 117, thereby ensuring that the liquid can flow into different first flow channels 105 and second flow channels 110 through the trunk flow channel 117. In addition, the width of the first flow channel 105 and the second flow channel 110 is less than the width of the trunk flow channel 117, thereby reducing the possibility of lifting up the solid part of the partition block 104. In an embodiment, the width of the trunk flow channel 117 is not less than 3 mm. For example, the width of the trunk flow channel is 3 mm, 3.2 mm, or 3.5 mm.

Referring to FIG. 1, in some implementations, the tearing part 126 is close to a first corner 118 formed at an intersection between two adjacent sides of the release film 100, thereby reducing the possibility of lifting up the back adhesive layer 101. In an embodiment, one side of the tearing part 126 is located on the extension line of one length side of the release film 100, that is, the tearing part 126 is located at the first corner 118 formed at the intersection of two adjacent sides of the release film 100, so that the initial tearing direction 125 of the tearing part 126 starts from this corner, thereby reducing the risk of reverse release.

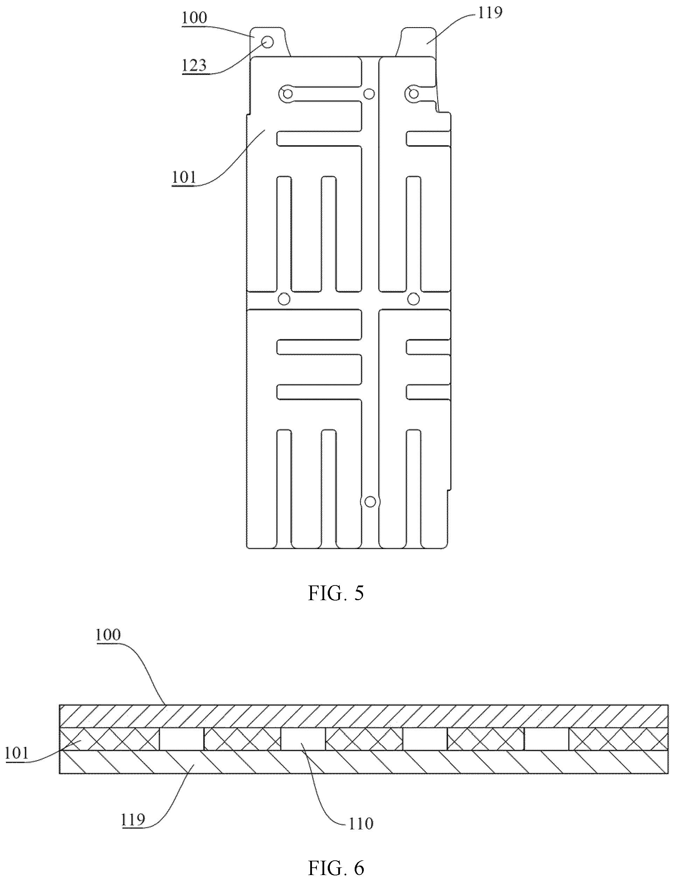

Referring to FIG. 5 and FIG. 6, in some implementations, the back adhesive structure further includes a base film 119, and the back adhesive layer 101 is sandwiched between the release film 100 and the base film 119. By providing the base film 119 to protect the back adhesive layer 101, the surface of the base film 119 facing to the back adhesive layer 101 is a smooth surface. It is to be understood that the specific material and structure of the base film 119 are not improved in this application, so the material and structure of the base film 119 will not be described in detail.

Referring to FIG. 1, in some embodiments, the release film 100 is provided with a first positioning through hole 120 and a second positioning through hole 121. Through the first positioning through hole 120 and the second positioning through hole 121, the accurate positioning and bonding of the back adhesive layer 101 on the terminal device can be conveniently achieved. The tearing part 126 is provided with a tearing through hole 123. By providing the through holes, on the one hand, the positioning of the back adhesive layer 101 during bonding is facilitated. On the other hand, the tearing part 126 can be conveniently clamped. In an embodiment, the first positioning through hole 120 corresponds to the first flow channel 105, that is, the first positioning through hole 120 is located in the first flow channel 105. The second positioning through hole 121 corresponds to the trunk flow channel 117, that is, the second positioning through hole 121 is located in the trunk flow channel 117.

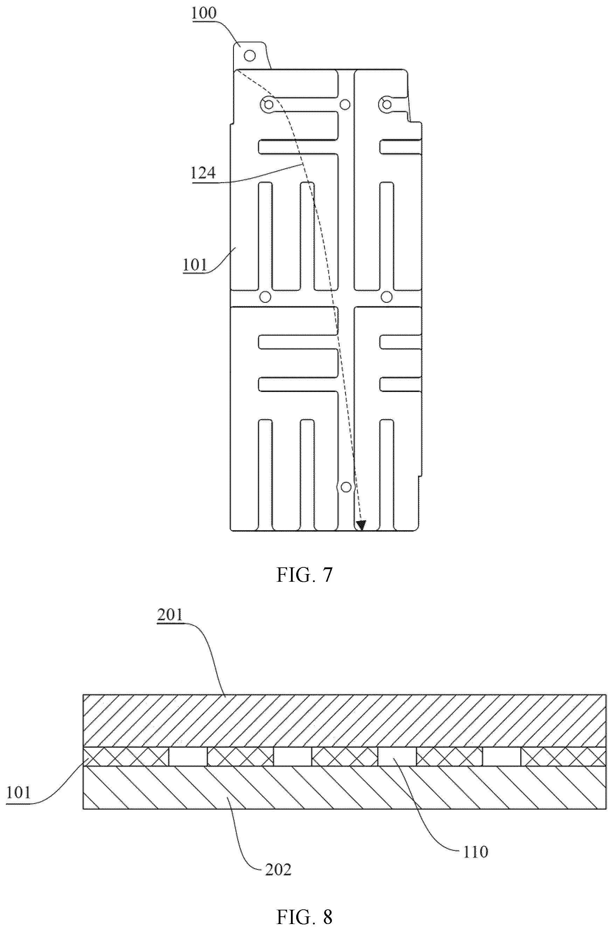

Referring to FIG. 7, in some embodiments, the release film 100 is provided with a tearing direction marking line 124, so that when tearing off the release film 100, the release film 100 can be torn off along the tearing direction marking line 124, thereby achieving a marking effect and reducing the possibility of lifting up the back adhesive layer 101. It is to be understood that when producing the back adhesive structure, the optimal tearing direction marking line 124 may be designed according to the actual need, and the possibility of lifting up the back adhesive layer 101 can be reduced by following the tearing direction marking line 124.

To sum up, in at least one embodiment, the back adhesive structure in this application is suitable for components that are bonded together through two side surfaces and require alcohol or other liquids to reduce the adhesiveness to remove the back adhesive layer, can reduce the difficulty of removing the back adhesive layer and can reduce the risk of reverse release. Moreover, the length of the first flow channel and the second flow channel is designed to ensure sufficient wetting during the removal of the back adhesive layer. At positions facing to the initial tearing direction and subjected to large peeling force, for example, the length of the second flow channel wall 107 facing to the initial tearing direction is extended, so that the side or wall of the back adhesive layer on the initial tearing direction of the release film has a longer length. At positions facing away from the initial tearing direction and far away from the initial point, a vertical second flow channel 110 is designed to ensure that the risk of reverse release is further reduced during the entire process of tearing off the release film. In addition, the length of the second flow channel 110 and the length of the first flow channel 105 are also limited, so that the length of the flow channel is designed to be as short as possible on the premise of reducing the risk of reverse release, thereby ensuring that alcohol can fully enter each flow channel. In addition, while reducing the risk of reverse release, the width of the solid part of the back adhesive layer is ensured to be as small as possible, that is, within the set range, so that the liquid such as alcohol can fully wet the back adhesive layer during removal.

In one or more embodiments, this application further provides a terminal device, which includes the back adhesive layer 101 of the back adhesive structure. In this way, the bonding between the components of the terminal device can be achieved through the back adhesive layer 101, thereby reducing the possibility of lifting up the back adhesive layer 101 and reducing the situation that the back adhesive is wrinkled.

In some embodiments, the terminal device may be a mobile phone, a tablet computer, an e-reader, a wearable device, a laptop, a Personal Digital Assistant (PDA), a television or a display screen. The television may be a smart television. Referring to FIG. 8, in one embodiment, the terminal device includes a battery 201 and a structural member. The structural member may be a middle frame 202. The back adhesive layer 101 is located between the battery 201 and the middle frame 202. In this way, the bonding between the battery 201 and the middle frame 202 can be achieved through the back adhesive layer 101. In this way, when the terminal device is assembled, the possibility of lifting up the back adhesive layer 101 at the battery 201 and the middle frame 202 is reduced, thereby reducing the situation that the back adhesive is wrinkled. In a case that the terminal device needs to be disassembled for repairing, jointly referring to FIG. 4, FIG. 9, and FIG. 10, when the battery 201 and the middle frame 202 need to be disassembled, a liquid such as alcohol is dripped into the trunk flow channel 117, the first flow channel 105 with the inlet end 109 located in the edge of the back adhesive layer 101, and the second flow channel 110 with the inlet end 109 located in the edge of the back adhesive layer 101, so that the alcohol can wet the back adhesive layer 101, thereby facilitating the disassembly between the battery 201 and the middle frame 202.

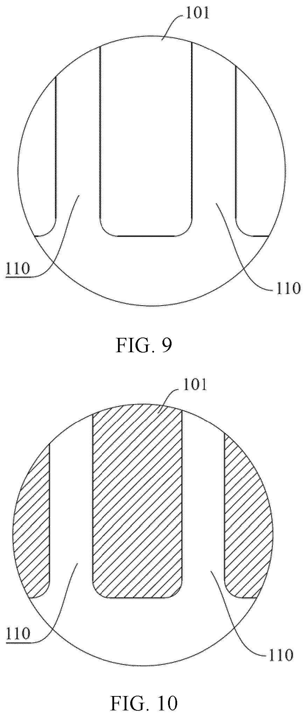

It is to be understood that FIG. 9 shows a state diagram of the solid part of the back adhesive layer 101 not wetted by alcohol after the alcohol (not shown) enters the second flow channel 110 when removal is required. FIG. 10 shows a state diagram of the solid part of the back adhesive layer 101 fully wetted by alcohol when removal is required, where the fully wetted solid part is shown through a section line. In addition, FIG. 9 and FIG. 10 only show the local structure of the back adhesive layer. Moreover, the back adhesive layer is not limited to being applied between the battery and the middle frame of the terminal device, but can also be used in other places where the back adhesive layer may be used.

In the description of this application, specific features, structures, materials, or characteristics may be properly combined in any one or more embodiments or examples.

Finally, it is to be understood that the above embodiments are only intended to describe rather than limit the technical solution of this application. Although this application has been described in detail with reference to the embodiments above, those skilled in the art are to understand that modifications may be still made to the technical solution described in each embodiment or equivalent replacements may be made to partial technical features thereof. However, these modifications or replacements do not cause the essence of the corresponding technical solution to depart from the spirit and scope of the technical solution of each embodiment of this application.

## Claims

1. A back adhesive structure, comprising:
a release film, wherein the release film is provided with a first side and a second side opposite to each other, and the first side is connected to a tearing part; and
a back adhesive layer, wherein the back adhesive layer and the release film are stacked, the back adhesive layer comprises at least one partition block, the partition block is provided with at least one first flow channel, a length of the first flow channel extends along a length extension direction of the first side of the release film, the first flow channel is provided with a first flow channel wall and a second flow channel wall that extend along a length direction of the first flow channel and are opposite to each other, the first flow channel wall faces to an initial tearing direction of the tearing part, the second flow channel wall faces away from the initial tearing direction of the tearing part, and a length of the first flow channel wall is not less than a first set value.

2. The back adhesive structure according to claim 1, wherein a plurality of first flow channels are provided in the partition block, and the plurality of first flow channels are provided side by side; and the first set value is not less than half a width of the partition block.

3. The back adhesive structure according to claim 2, wherein a length direction of the first side is parallel to a width direction of the partition block.

4. The back adhesive structure according to claim 1, wherein the first flow channel is provided with an inlet end and a blind end opposite to each other, the blind end of the first flow channel is close to the tearing part, and the inlet end of the first flow channel is away from the tearing part.

5. The back adhesive structure according to claim 1, wherein the first flow channel wall is away from the first side of the release film and close to the second side of the release film.

6. The back adhesive structure according to claim 1, wherein the partition block further comprises at least one second flow channel, and an angle is formed between a length extension direction of the second flow channel and a length extension direction of the first flow channel.

7. The back adhesive structure according to claim 6, wherein a plurality of second flow channels are provided, the plurality of second flow channels are provided side by side, and the angle formed between the length extension direction of the second flow channel and the length extension direction of the first flow channel is a right angle.

8. The back adhesive structure according to claim 6, wherein the second flow channel is provided with an inlet end and a blind end opposite to each other, the blind end of the second flow channel is close to the tearing part, and the inlet end of the second flow channel is away from the tearing part.

9. The back adhesive structure according to any one of claims 6 to 8, wherein a plurality of partition blocks are provided, the plurality of partition blocks are arranged in rows and columns, and every two adjacent partition blocks are spaced apart.

10. The back adhesive structure according to claim 9, wherein a trunk flow channel is formed between every two adjacent partition blocks; and the first flow channel of at least one partition block is communicated with the trunk flow channel, and the second flow channel of at least one partition block is communicated with the trunk flow channel.

11. The back adhesive structure according to claim 10, wherein a width of the first flow channel is equal to a width of the second flow channel, the width of the first flow channel is less than a width of the trunk flow channel, and the width of the second flow channel is less than the width of the trunk flow channel.

12. The back adhesive structure according to any one of claims 1 to 8, wherein the tearing part is close to a first corner formed at an intersection between two adjacent sides of the release film.

13. The back adhesive structure according to any one of claims 1 to 8, further comprising a base film, wherein the back adhesive layer is sandwiched between the release film and the base film.

14. A terminal device, comprising the back adhesive layer of the back adhesive structure according to any one of claims 1 to 13.

15. The terminal device according to claim 14, comprising a battery and a middle frame, wherein the battery and the middle frame are connected through the back adhesive layer.

16. A back adhesive structure, comprising:
a release film, wherein the release film is provided with a first side and a second side opposite to each other, and the first side is connected to a tearing part; and
a back adhesive layer, wherein the back adhesive layer and the release film are stacked, the back adhesive layer comprises at least one partition block, the partition block is provided with at least one first flow channel, a length of the first flow channel extends along a length extension direction of the first side of the release film, the first flow channel is provided with a first flow channel wall and a second flow channel wall that extend along a length direction of the first flow channel and are opposite to each other, the first flow channel wall faces to an initial tearing direction of the tearing part, the second flow channel wall faces away from the initial tearing direction of the tearing part, a length of the first flow channel wall is not less than a first set value, and the first set value is not less than half a width of the partition block.

17. The back adhesive structure according to claim 16, wherein a plurality of first flow channels are provided in the partition block, and the plurality of first flow channels are provided side by side.

18. The back adhesive structure according to claim 17, wherein a length direction of the first side is parallel to a width direction of the partition block.

19. The back adhesive structure according to claim 16, wherein the first flow channel is provided with an inlet end and a blind end opposite to each other, the blind end of the first flow channel is close to the tearing part, and the inlet end of the first flow channel is away from the tearing part.

20. The back adhesive structure according to claim 16, wherein the first flow channel wall is away from the first side of the release film and close to the second side of the release film.

21. The back adhesive structure according to claim 16, wherein the partition block further comprises at least one second flow channel, and an angle is formed between a length extension direction of the second flow channel and a length extension direction of the first flow channel.

22. The back adhesive structure according to claim 21, wherein a plurality of second flow channels are provided, the plurality of second flow channels are provided side by side, and the angle formed between the length extension direction of the second flow channel and the length extension direction of the first flow channel is a right angle.

23. The back adhesive structure according to claim 21, wherein the second flow channel is provided with an inlet end and a blind end opposite to each other, the blind end of the second flow channel is close to the tearing part, and the inlet end of the second flow channel is away from the tearing part.

24. The back adhesive structure according to any one of claims 21 to 23, wherein a plurality of partition blocks are provided, the plurality of partition blocks are arranged in rows and columns, and every two adjacent partition blocks are spaced apart.

25. The back adhesive structure according to claim 24, wherein a trunk flow channel is formed between every two adjacent partition blocks; and the first flow channel of at least one partition block is communicated with the trunk flow channel, and the second flow channel of at least one partition block is communicated with the trunk flow channel.

26. The back adhesive structure according to claim 25, wherein a width of the first flow channel is equal to a width of the second flow channel, the width of the first flow channel is less than a width of the trunk flow channel, and the width of the second flow channel is less than the width of the trunk flow channel.

27. The back adhesive structure according to any one of claims 16 to 23, wherein the tearing part is close to a first corner formed at an intersection between two adjacent sides of the release film.

28. The back adhesive structure according to any one of claims 16 to 23, further comprising a base film, wherein the back adhesive layer is sandwiched between the release film and the base film.

29. A terminal device, comprising the back adhesive layer of the back adhesive structure according to any one of claims 16 to 28.

30. The terminal device according to claim 29, comprising a battery and a middle frame, wherein the battery and the middle frame are connected through the back adhesive layer.
